# EUROPEAN PATENT SPECIFICATION

(11) **EP 2 926 973 B1**
(45) Date of publication and mention of the grant of the patent: **21.07.2021**
(21) Application number: 15162074.7
(22) Date of filing: 31.03.2015
(51) Int. Cl.: B29C 35/16, B29C 48/09, B29C 48/90, B29C 48/91, B29C 48/88

(54) **METHOD AND LINE FOR THE PRODUCTION OF RIGID PIPES**
Verfahren und Fertigungsstrasse für die Herstellung von festen Rohren
CHAÎNE DE FABRICATION POUR LA PRODUCTION DE TUYEAUX RIGIDES

(30) Priority: 31.03.2014 IT VI20140083
(43) Date of publication of application: 07.10.2015
(73) Proprietor: FITT S.p.A, 36066 Sandrigo (Vicenza) (IT)
(72) Inventor: LONGO, Giovanni Antonio, 36066 Sandrigo (VI) (IT)
(74) Representative: Autuori, Angelo

(56) References cited:
- EP-A1- 0 795 389
- EP-A1- 0 904 188
- EP-A1- 2 130 662
- WO-A1-92/20453
- US-A- 4 573 893
- US-A- 4 750 873
- US-A- 5 028 376

## Description

### Field of the invention

The present invention is generally applicable to the technical field of the production of articles of polymeric material, and it particularly relates to a method for the production of rigid pipes, particularly for building or hydraulic use.

The invention further relates to a line for the production of rigid pipes.

### Background of Invention

It is known that the production of rigid pipes for building or hydraulic use, which generally are made of PVC or polypropylene, is accomplished by a method that includes the steps of extrusion of the material to obtain a continuous tubular element, cooling the same and cutting the cooled continuous tubular element to obtain the finished pipe.

Since now, the continuous tubular element exiting from the extrusion head is cooled through a circulation jacket of cooling liquid, which cools the outer side. Inside, the pipe partially cools in contact with the inner air, which is almost stationary.

Consequently, the speed of cooling the continuous tubular element exiting from the extrusion head is low and this reduces the extrusion speed and thus the productivity of the extrusion line.

Furthermore, the inner surface of the continuous tubular element has a cooling speed completely different from the outer one because the heat is transmitted by conduction through a low conductivity wall. This thermal configuration may produce structural unhomogeneity of the wall between the inner and outer side and geometric irregularities, particularly in thick pipes, with a strong increase of the production scraps.

This process can be improved both in terms of cost and productivity.

However, the possibility of having on the inner side of the pipe an efficient cooling system similar to the one provided on the outer side collides with a series of technical problems.

In fact, the inner surface of the pipe is hardly accessible because it is closed on one side by the extrusion head, while on the other side it is closed by the cutting system of the pipes.

Moreover, the air inside the continuous tubular element has a heat transfer coefficient much lower than that of the water in forced convection at the outer side.

Furthermore, the pipe at the end of the cooling process and before the cutting operation must be perfectly dry to avoid damage to the cutters.

In the attempt to overcome the above-mentioned drawbacks, various devices have been provided.

From the documents EP0904188, EP2130662, US5028376, EP0795389 and US4573893 pipe extrusion devices are known which provide the cooling of the same both on the inner surface and on the outer one thereof.

From the document US4780873 an extrusion device is known that includes internally to the pipe a series of nozzles spraying water susceptible to cool the inner surface thereof. After spraying the water stagnates in liquid form inside the pipe, so as the device provides a suction line of the water connected to vacuum means.

Therefore, this solution is expensive, difficult to achieve and complicated to manage.

Furthermore, It is clear that the productivity of this line is limited by the need of suction the water from the inside of the pipe.

Another drawback is the need of frequent line stop for maintenance and restores, since the suction line tends to become easily dirty with a consequent decrease of the drying efficiency.

### Summary of the Invention

Object of the present invention is to at least partially overcome the above mentioned drawbacks, by providing a method and a line that allows to minimize the time and / or costs of production of rigid pipes.

Another object of the invention is to provide a method and a line that allow the production of rigid pipes in a simple and rapid manner.

Another object of the invention is to provide a method and a line for the production of rigid pipes having high productivity.

Another object of the invention is to provide a method and a line for the production of rigid pipes that allows to minimize production scraps.

These objects, and others which will appear more clearly hereafter, are fulfilled by a method and / or a line for the production of rigid pipes defined in claims 1 and 15.

The method according to the invention is defined in claim 1.

Preferably, the drops of cooling liquid may have an average diameter comprised between 30 µm and 200 µm, preferably between 50 µm and 150 µm.

This average diameter ensures the almost instantaneous evaporation once in contact with the inner surface of the continuous tubular element.

The amount of cooling liquid sprayed is such that it evaporates when in contact with the inner surface of the continuous tubular element without being accumulated in liquid form therein.

In this way, the inner surface is substantially dry upon the cutting of the continuous tubular element without the use of water suction means therein.

Thanks to the above mentioned features, the method according to the invention allows to produce the rigid pipes in a simpler and cheaper manner compared to the prior art.

The absence of suction means allows a very high productivity. Moreover, the method according to the invention allows to minimize production scraps, because the pipe is always dry upon the cutting.

Advantageously, the blowing out of the vapor stream that is generated by the evaporation of the drops of the cooling liquid occurs through the end opposite to the extrusion head, where the cutting means are placed. More particularly, the blowing out is accomplished by passage through the latter.

Advantageous embodiments of the invention are defined in accordance with the dependent claims.

### Brief description of the drawings

Further advantages of the invention will become more evident reading the detailed description of a preferred but not exclusive embodiment of a line **100** for the production of rigid pipes **1,** shown as a non-limiting example with the help of the annexed drawing, wherein:

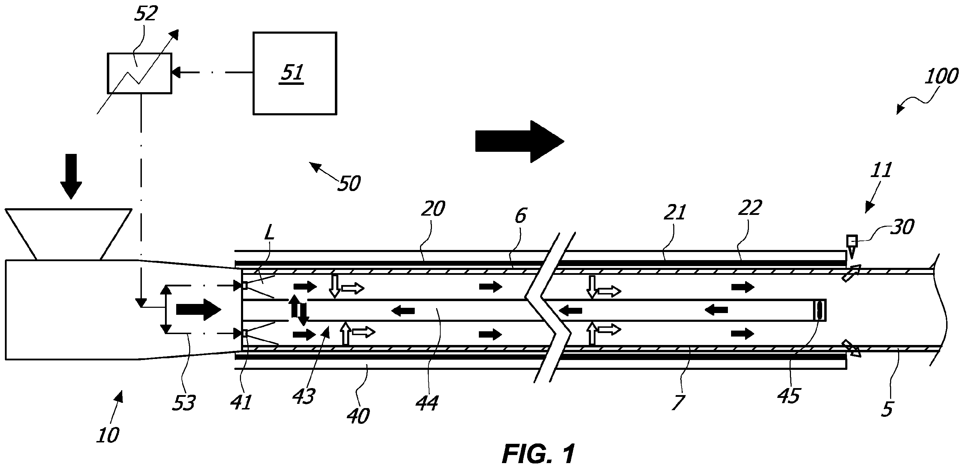

**FIG. 1** is a schematic view of the production line **100.**

### Detailed description of a preferred embodiment

With reference to the above mentioned figures, the method according to the invention is suitable for the continuous production of rigid pipes 1, particularly for building or hydraulic use.

Essentially, the method according to the invention may be implemented by means of a production line **100** that includes an extrusion head **10,** a respective calibrating cylinder **20** and cutting means, such as a set of cutters **30.**

In a *per se* known way, the extrusion head **10** is fed by at least one polymeric material, generally PVC or polypropylene.

Usually, the rigid pipes **1** are monolayer, and therefore the extrusion head **10** may be fed by a single polymeric material.

However, it is understood that the rigid pipes **1** may have any number of layers, and therefore the extrusion head **10** may be fed by more equal or different polymers. On the other hand, the production line **100** may include more than one extrusion head **10,** possibly placed in parallel.

The polymeric material may be extruded at a temperature of about 130 ° C - 150 ° C to form a continuous tubular element **5.**

The extrusion head **10** may be faced to and / or in correspondence to the calibrating cylinder **20,** in which the continuous tubular element **5** may be conveyed to be calibrated and at the same time cooled.

The calibrating cylinder **20** may be faced to and / or in correspondence to the cutters **30,** thanks to which the continuous tubular element **5** calibrated and cooled by the calibrating cylinder **20** is cut to the desired size to form the rigid pipes **1.**

To allow the calibration of the continuous tubular element **5,** the outer surface **6** of the latter is susceptible to adhere in a *per se* known way to the inner surface **21** of the calibrating cylinder **20,** by means of vacuum means. At the same time, the continuous tubular element **5** is cooled, so as the polymeric material permanently maintains the shape of the calibrating cylinder **20.**

The cooling is accomplished by cooling at the same time both the external surface **6** and the inner surface **7** of the continuous tubular element **5.**

It is understood that the expression "to cool a surface" or derivatives indicates the application of cooling means on that surface.

This expression therefore excludes the cooling that the continuous tubular element may have for natural or forced convection of air during its transport.

In order to cool the outer surface **6** of the continuous tubular element **5,** a cooling jacket **40** is provided placed externally to the calibrating cylinder **20** in contact with its outer surface **22.**

In a preferred but not exclusive embodiment, in the jacket **40** cooled water may be used at a controlled temperature, for example 18 ° C - 20 ° C.

The cooling of the inner surface **7** of the continuous tubular element **5** is accomplished by spraying a cooling liquid L thereon, for example water.

The drops of sprayed water have micrometric size, an average diameter being lower than 250 µm.

Preferably, the drops of cooling liquid may have an average diameter comprised between 30 µm and 200 µm, preferably between 50 µm and 150 µm.

Such drops evaporate once in contact with the inner surface **7,** thus cooling it. This evaporation generates a vapor steam inside the continuous tubular element **5.**

The spraying maximizes the heat exchange surface of the water, so as the evaporative cooling of the inner surface **7** of the continuous tubular element **5** is extremely efficient, comparable to the outer one accomplished by the jacket **40.**

This allows to have an extremely homogeneous cooling on both inner **7** and outer **6** surfaces of the continuous tubular element **5,** with a consequent maximization of the productivity of the production process and minimization of production scraps.

In fact, thanks to the homogeneous cooling of the inner **7** and outer **6** surfaces it is possible to increase the speed of extrusion of the continuous tubular element **5** with respect to the production lines of the prior art.

Furthermore, the homogeneous cooling improves the structural quality of the inner layers of the pipe wall, with a consequent reduction of production scraps.

Moreover, to avoid damage to the cutters **30,** the quantity of cooling liquid sprayed on the inner surface **7** of the continuous tubular element **5** may be such as to evaporate once in contact therewith without being accumulated in liquid form inside the continuous tubular element **5.**

In this way, the inner surface **7** is substantially dry upon the cutting of the continuous tubular element **5** without the use of water suction means therein. The line **100,** therefore, may be deprived of such water suction means.

This makes the method according to the invention simple and practical to implement.

Suitably, the blowing out of the vapor steam generated by evaporation of the drops of sprayed cooling liquid **L** may occur through the end **11** of the continuous tubular element **5** opposite to the extrusion head **10,** and in particular may be accomplished by passing through the cutters **30.**

In order to spray the water inside the continuous tubular element **5,** one or more spraying nozzles **41** placed on the extrusion head **10** may be provided.

In a preferred but not exclusive embodiment, the spraying nozzles **41** may be of the pneumatic type, in which the cooling liquid may be mixed with compressed air at a predetermined pressure, for example of 2 bar to 6 bar, to generate a mixed stream of air and cooling liquid.

To improve the cooling efficiency of the inner surface **7** of the continuous tubular element **5,** and more generally to facilitate a homogeneous cooling between the inside and the outside thereof, a step of recirculation of the drops of sprayed cooling liquid **L and** / or of vapor steam that is generated by the evaporation thereof may be provided.

Preferably, this step of recirculation may be accomplished by means of a recirculation device **43** which may include a tubular conveyor **44** coaxial to the continuous tubular element **5** and one or more circulation units, such as a fan **45,** operatively connected to the tubular conveyor **44** to force the mixed air stream / cooling liquid exiting from the pneumatic nozzles **41** and possibly the vapor steam therethrough.

In FIG. 1 it is shown as an example with the full-colored arrow the path of the mixed air / cooling liquid stream and with the empty arrow the path of the vapor steam.

Suitably, the tubular conveyor **44** may extend coaxially to the continuous tubular element **5** from the extrusion head **10.** In this case, the pneumatic nozzles **41** may be peripherally placed thereto.

The spraying nozzles **41** are fed by a feed line **50** of the cooling liquid **L,** which may for example comprise a reservoir **51** and means **52** to cool the cooling liquid **L,** such as a *chiller.*

The feed line **50** may include one or more branches **53** passing through the extrusion head **10.**

To avoid or at least to minimize the heating of the cooling liquid **L** upon the entry into the extrusion head **10,** the one or more branches **53** passing therethrough may be thermally insulated with respect to the same extrusion head **10.**

In fact, the latter is made for the most part in metallic material and is passed through by the polymeric material to be extruded, which has high temperature. Without thermal insulation the cooling liquid **L** would heat upon the entry of the extrusion head **10,** and this would influence negatively the efficacy of the cooling thereof and in general the productivity of the line **100.**

Any thermal insulation means may be used to insulate one or more branches **53.**

For example, the conduits that define the same may be made in a thermally insulating material, for example of polymeric type, or they may include one or more layers of thermally insulating material, for example polyurethane.

Furthermore, possibly in combination with the above-mentioned thermal insulation means, the conduits that define the one or more branches **53** may be spaced apart from those wherein the molten polymeric material to be extruded passes, and possibly they may be placed in sections of the extrusion head thermally insulated from those through which the conduits of the polymeric material to be extruded pass. For example, the one or more branches **53** may be placed in correspondence of the supporting spokes of the extrusion head **10.**

In combination or alternatively to the thermal insulation, the one or more branches **53** passing through the extrusion head **10** can be cooled with suitable cooling means. Any cooling means can be used, as long as being susceptible to the thermal exchange between the one or more branches **53** and one or more streams at predetermined temperature, that may be of 15 ° C - 20 ° C.

For example, around the one or more branches **53** a coil may be placed with water at the above-mentioned temperature.

From the above description, it is clear that the invention fulfils the intended objects.

The invention is susceptible of numerous modifications and variations, all falling within the inventive concept expressed in the appended claims. The materials may be different according to the needs, without exceeding the scope of the invention defined in the appended claims.

## Claims

1. A method for the continuous production of rigid pipes, particularly for building or hydraulic use, comprising in sequence the steps of:
- extruding at least one polymeric material to obtain a continuous tubular element **(5)** with an outer surface **(6)** and an inner surface **(7);**
- cooling the continuous tubular element **(5);**
- cutting the cooled continuous tubular element (5) to obtain a plurality of finished rigid pipes **(1);**
wherein said step of cooling the continuous tubular element **(5)** is accomplished by cooling at the same time both the inner surface **(7)** and the outer surface **(6)** thereof, so as to obtain the homogeneous cooling of the two surfaces **(6, 7);**
wherein the cooling of the inner surface **(7)** of the continuous tubular element **(5)** is accomplished by spraying thereon drops of a cooling liquid **(L)** having an average diameter lower than 250 µm;
wherein the quantity of cooling liquid (**L**) is sprayed so as to evaporate once in contact with said inner surface **(7)** without being accumulated in liquid form inside the continuous tubular element **(5),** so that said inner surface **(7)** is substantially dry upon said cutting of the continuous tubular element **(5)** without using water suction means therein.

2. Method according to claim 1, wherein said drops of cooling liquid **(L)** have an average diameter comprised between 30 µm and 200 µm, preferably comprised between 50 µm and 150 µm.

3. Method according to claim 1 or 2, wherein said extruding step is accomplished by at least one extrusion head **(10),** the blowing out of the vapor steam that is generated as a result of the evaporation of said drops of cooling liquid **(L)** occurring through the end **(11)** of the continuous tubular element **(5)** which is opposite to said extrusion head **(10).**

4. Method according to the preceding claim, wherein said cutting step is accomplished by cutting means **(30)** placed in correspondence with said opposite end **(11)** of said continuous tubular element **(5),** the moist air that is generated as a result of the evaporation of said drops of cooling liquid **(L)** passing through said cutting means **(30).**

5. Method according to claim 1, 2, 3 or 4, wherein a recirculation step is provided within said continuous tubular element **(5)** of said drops of sprayed cooling liquid **(L)** and / or of the moist air that is generated as a result of the evaporation of said drops of cooling liquid (L).

6. Method according to the preceding claim, wherein said recirculation step is accomplished by means of a recirculation device **(43)** comprising a tubular conveyor **(44)** coaxial to said continuous tubular element **(5)** and at least one circulation device **(45)** operatively connected to said tubular conveyor **(44)** to force therethrough said drops of sprayed cooling liquid **(L)** and / or moist air that is generated by the evaporation of said drops of cooling liquid **(L).**

7. Method according to any one of the preceding claims, wherein the spraying of the cooling liquid **(L)** is accomplished by one or more spray nozzles **(41)** placed on said extrusion head **(10).**

8. Method according to the preceding claim, wherein said one or more spray nozzles **(41)** are powered by a feed line **(50)** of said cooling liquid (L) having at least one branch **(53)** passing through said extrusion head **(10).**

9. Method according to the preceding claim, wherein said at least one branch **(53)** is thermally insulated with respect to said extrusion head **(10)** so as to avoid or minimize the heating of said cooling liquid **(L)** upon the passage therethrough **(10).**

10. Method according to claim 8 or 9, wherein said at least one branch **(53)** is at least partially cooled during the passage through said extrusion head **(10).**

11. Method according to any one of claims 7 to 10, wherein said one or more spray nozzles **(41)** are of the pneumatic type in which the cooling liquid **(L)** is mixed with compressed air at a predetermined pressure to generate a mixed stream of air and cooling liquid.

12. Method according to the preceding claim, wherein said predetermined pressure is 2 bar to 6 bar.

13. Method according to claim 11 or 12, wherein said tubular conveyor **(44)** projects from said extrusion head **(10),** said one or more pneumatic spray nozzles **(41)** being placed peripherally thereto.

14. Method according to any one of the preceding claims, further comprising a step of calibration of the continuous tubular element **(5)** which is accomplished at the same time of said cooling step of the outer surface **(6)** of the same continuous tubular element **(5),** the method further comprising the step of conveying the continuous tubular element **(5)** within at least one calibrating cylinder **(20)** having predetermined diameter, said calibration step being accomplished by making the outer surface **(6)** of the continuous tubular element **(5)** adhere to the inner surface **(21)** of said calibrating cylinder **(20),** said step of cooling of the outer surface **(7)** of the continuous tubular element **(5)** being accomplished by cooling the outer surface **(22)** of said calibrating cylinder **(20).**

15. A line for the continuous production of rigid pipes, particularly for building or hydraulic use, comprising:
- at least one extrusion head **(10)** susceptible to extrude at least one polymeric material to obtain a continuous tubular element **(5)** with an outer surface **(6)** and an inner surface **(7);**
- at least one calibrating cylinder **(20)** of the continuous tubular element **(5)** exiting from the at least one extrusion head **(10);**
- cooling means for cooling the continuous tubular element **(5);**
- cutting means **(30)** for cutting the cooled continuous tubular element **(5)** to obtain a plurality of finished rigid pipes **(1);**
wherein said means for cooling the continuous tubular element **(5)** include a cooling jacket **(40)** placed externally to said at least one calibrating cylinder **(20)** to cool the outer surface **(6)** of the continuous tubular element **(5)** upon the calibration thereof, said cooling means including one or more spray nozzles (**41**), the spray nozzles (41) being fed by a feed line (50) of the cooling liquid (L), the spray nozzles being placed on said extrusion head **(10)** to spray on the inner surface **(7)** of the continuous tubular element **(5)** drops of a cooling liquid **(L)** having an average diameter lower than 250 µm, so as to obtain the homogeneous cooling of both the outer surface **(6)** and the inner one **(7)** of the continuous tubular element (5); wherein said feed line **(50)** is configured so that the quantity of sprayed cooling liquid **(L)** is such that it evaporates once in contact with said inner surface **(7)** without being accumulated in liquid form inside the continuous tubular element **(5),** so as said inner surface **(7)** is substantially dry upon the cutting of the continuous tubular element **(5)** without the use of water suction means therein.

## Patentansprüche

1. Verfahren zur kontinuierlichen Herstellung von festen Rohren, insbesondere für Bau- oder Hydraulikzwecke, umfassend die Schrittfolge von:
- Extrudieren mindestens eines Polymermaterials, um ein kontinuierliches röhrenförmiges Element (5) mit einer Außenfläche (6) und einer Innenfläche (7) zu erhalten;
- Kühlen des kontinuierlichen röhrenförmigen Elements (5);
- Schneiden des gekühlten kontinuierlichen röhrenförmigen Elements (5), um mehrere fertige feste Rohre (1) zu erhalten;
wobei der Schritt des Abkühlens des kontinuierlichen röhrenförmigen Elements (5) durch gleichzeitiges Abkühlen sowohl dessen Innenfläche (7) als auch Außenfläche (6) ausgeführt wird, um eine homogene Abkühlung der beiden Flächen (6, 7) zu erhalten;
wobei das Abkühlen der Innenfläche (7) des kontinuierlichen röhrenförmigen Elements (5) durch Aufsprühen von Tropfen einer Kühlflüssigkeit (L) mit einem durchschnittlichen Durchmesser kleiner als 250 µm ausgeführt wird;
wobei die Menge an gesprühter Kühlflüssigkeit (L) so gewählt ist, um bei einem Kontakt mit der Innenfläche (7) sofort zu verdampfen, ohne sich in flüssiger Form in dem kontinuierlichen röhrenförmigen Element (5) anzusammeln, so dass die Innenfläche (7) beim Schneiden des kontinuierlichen röhrenförmigen Elements (5) im Wesentlichen trocken ist, ohne Verwendung eines Wassersaugers darin.

2. Verfahren nach Anspruch 1, wobei die Tropfen der Kühlflüssigkeit (L) einen durchschnittlichen Durchmesser zwischen 30 µm und 200 µm aufweisen, vorzugsweise zwischen 50 µm und 150 µm.

3. Verfahren nach Anspruch 1 oder 2, wobei der Schritt des Extrudierens durch mindestens einen Extrudierkopf (10) ausgeführt wird, wobei das Ausblasen des Dampfes, der als Ergebnis des Verdampfens der Tropfen der Kühlflüssigkeit (L) entsteht, durch das Ende (11) des kontinuierlichen röhrenförmigen Elements (5) erfolgt, das dem Extrusionskopf (10) gegenüberliegt.

4. Verfahren nach dem vorherigen Anspruch, wobei der Schritt des Schneidens durch Schneidmittel (30) ausgeführt wird, die in Übereinstimmung mit dem gegenüberliegenden Ende (11) des kontinuierlichen röhrenförmigen Elements (5) angeordnet sind, wobei die feuchte Luft, die als Ergebnis des Verdampfens der Tropfen der Kühlflüssigkeit (L) entsteht, die Schneidmittel (30) durchquert.

5. Verfahren nach Anspruch 1, 2, 3 oder 4, wobei ein Umwälzschritt innerhalb des kontinuierlichen röhrenförmigen Elements (5) der Tropfen der gesprühten Kühlflüssigkeit (L) und/oder der feuchten Luft, die als Ergebnis des Verdampfens der Tropfen der Kühlflüssigkeit (L) entsteht, vorgesehen ist.

6. Verfahren nach dem vorherigen Anspruch, wobei der Umwälzschritt durch Umwälzmittel (43) ausgeführt wird, umfassend einen Röhrenförderer (44), der koaxial zu dem kontinuierlichen röhrenförmigen Element (5) angeordnet ist, und mindestens eine Zirkulationsvorrichtung (45), die betriebsmäßig mit dem Röhrenförderer (44) verbunden ist, um die Tropfen der gesprühten Kühlflüssigkeit (L) und/oder die feuchte Luft, die als Ergebnis des Verdampfens der Tropfen der Kühlflüssigkeit (L) entsteht, dadurch zu fördern.

7. Verfahren nach einem der vorherigen Ansprüche, wobei das Sprühen der Kühlflüssigkeit (L) durch eine oder mehrere Sprühdüsen ausgeführt wird, die an dem Extrusionskopf (10) angeordnet sind.

8. Verfahren nach dem vorherigen Anspruch, wobei die eine oder mehreren Sprühdüsen (41) durch eine Zuleitung (50) der Kühlflüssigkeit (L) versorgt werden, mit mindestens einem Abzweig (53) der durch den Extrusionskopf (10) verläuft.

9. Verfahren nach dem vorherigen Anspruch, wobei der mindestens eine Abzweig (53) in Bezug auf den Extrusionskopf (10) thermisch isoliert ist, um die Erwärmung der Kühlflüssigkeit (L) beim Passieren durch (10) zu verhindern oder zu minimieren.

10. Verfahren nach Anspruch 8 oder 9, wobei der mindestens eine Abzweig (53) während des Durchgangs des Extrusionskopfs (10) zumindest teilweise gekühlt wird.

11. Verfahren nach einem der Ansprüche 7 bis 10, wobei die eine oder mehreren Sprühdüsen (41) vom pneumatischen Typ sind, in welchen die Kühlflüssigkeit (L) mit Druckluft unter einem vorbestimmten Druck gemischt wird, um einen gemischten Strom von Luft und Kühlflüssigkeit (L) zu erzeugen.

12. Verfahren nach dem vorherigen Anspruch, wobei der vorbestimmte Druck 2 bar bis 6 bar beträgt.

13. Verfahren nach Anspruch 11 oder 12, wobei der Röhrenförderer (44) aus dem Extrusionskopf (10) herausragt, wobei die eine oder mehreren pneumatischen Sprühdüsen (41) peripher dazu angeordnet sind.

14. Verfahren nach einem der vorherigen Ansprüche, weiterhin umfassend einen Kalibrierungsschritt des kontinuierlichen röhrenförmigen Elements (5), welcher gleichzeitig mit dem Schritt des Abkühlens der Außenfläche (6) desselben kontinuierlichen röhrenförmigen Elements (5) ausgeführt wird, wobei das Verfahren weiterhin den Schritt des Förderns des kontinuierlichen röhrenförmigen Elements (5) in mindestens einem Kalibrierzylinder (20) mit einem vorbestimmten Durchmesser umfasst, wobei der Kalibrierungsschritt ausgeführt wird durch Herstellen der Außenfläche (6) des kontinuierlichen röhrenförmigen Elements (5) durch Anliegen an der Innenfläche (21) des Kalibrierzylinders (20), wobei der Schritt des Abkühlens der Außenfläche (7) des kontinuierlichen röhrenförmigen Elements (5) durch Kühlen der Außenfläche (22) des Kalibrierzylinders (20) ausgeführt wird.

15. Fertigungsstraße zur kontinuierlichen Herstellung von festen röhrenförmigen Elementen, insbesondere für Bau- oder Hydraulikzwecke, umfassend:
- mindestens einen Extrusionskopf (10) ausgebildet zum Extrudieren mindestens eines Polymermaterials, um ein kontinuierliches röhrenförmiges Element (5) mit einer Außenfläche (6) und einer Innenfläche (7) zu erhalten;
- mindestens einen Kalibrierzylinder (20) für das kontinuierliche röhrenförmige Element (5), welches aus dem mindestens einen Extrusionskopf (10) austritt;
- Kühlmittel zum Kühlen des kontinuierlichen röhrenförmigen Elements (5);
- Schneidmittel (30) zum Schneiden des gekühlten röhrenförmigen Elements (5), um mehrere fertige feste Rohre (1) zu erhalten;
wobei die Kühlmittel zum Kühlen des kontinuierlichen röhrenförmigen Elements (5) eine Kühlmanschette umfassen, die extern an dem mindestens einen Kalibrierzylinder (20) angeordnet ist, um die Außenfläche (6) des kontinuierlichen röhrenförmigen Elements (5) während dessen Kalibrierung zu kühlen, wobei die Kühlmittel eine oder mehrere Sprühdüsen (41) umfassen, wobei die Sprühdüsen (41) über eine Zuleitung (50) mit Kühlmittel (L) versorgt werden, wobei die Sprühdüsen an dem Extrusionskopf (10) angeordnet sind, um die Innenfläche (7) des kontinuierlichen röhrenförmigen Elements (5) mit Tropfen einer Kühlflüssigkeit (L) mit einem durchschnittlichen Durchmesser kleiner als 250 µm zu besprühen, um eine homogene Kühlung der Außenfläche (6) und des Inneren (7) des kontinuierlichen röhrenförmigen Elements (5) zu erreichen;
wobei die Zuleitung (50) so ausgebildet ist, und die Menge an gesprühter Kühlflüssigkeit (L) so ist, dass diese bei einem Kontakt mit der Innenfläche (7) sofort verdampft, ohne sich in flüssiger Form in dem kontinuierlichen röhrenförmigen Element (5) anzusammeln, so dass die Innenfläche (7) beim Schneiden des kontinuierlichen röhrenförmigen Elements (5) im Wesentlichen trocken ist, ohne Verwendung eines Wassersaugers darin.

## Revendications

1. Procédé destiné à la production en continu de tuyaux rigides, en particulier à la construction ou à l'utilisation hydraulique, comprenant consécutivement les étapes :
- d'extrusion d'au moins un matériau polymère pour obtenir un élément tubulaire continu (5) comportant une surface externe (6) et une surface interne (7) ;
- de refroidissement de l'élément tubulaire continu (5) ;
- de découpe de l'élément tubulaire continu refroidi (5) pour obtenir une pluralité de tuyaux rigides finis (1) ;
dans lequel ladite étape de refroidissement de l'élément tubulaire continu (5) est mise en œuvre en refroidissant en même temps à la fois la surface interne (7) et la surface externe (6) de celui-ci, de manière à obtenir le refroidissement homogène des deux surfaces (6, 7) ;
dans lequel le refroidissement de la surface interne (7) de l'élément tubulaire continu (5) est mis en œuvre en pulvérisant dessus des gouttes d'un liquide de refroidissement (L) de diamètre moyen inférieur à 250 µm ;
dans lequel le liquide de refroidissement (L) est pulvérisé en quantité telle qu'il s'évapore une fois en contact avec ladite surface interne (7) sans s'accumuler sous forme liquide à l'intérieur de l'élément tubulaire continu (5), de sorte que ladite surface interne (7) est sensiblement sèche lors de ladite découpe de l'élément tubulaire continu (5) sans utiliser de moyens d'aspiration d'eau dans celui-ci.

2. Procédé selon la revendication 1, dans lequel lesdites gouttes de liquide de refroidissement (L) comportent un diamètre moyen compris entre 30 µm et 200 µm, de préférence compris entre 50 µm et 150 µm.

3. Procédé selon la revendication 1 ou 2, dans lequel ladite étape d'extrusion est mise en œuvre par au moins une tête d'extrusion (10), l'évacuation de la vapeur d'eau qui est générée par évaporation desdites gouttes de liquide de refroidissement (L) se produisant à travers l'extrémité (11) de l'élément tubulaire continu (5) qui est opposée à ladite tête d'extrusion (10).

4. Procédé selon la revendication précédente, dans lequel ladite étape de découpe est mise en œuvre par des moyens de découpe (30) placés en correspondance avec ladite extrémité opposée (11) dudit élément tubulaire continu (5), l'air humide qui est généré à la suite de l'évaporation desdites gouttes de liquide de refroidissement (L) traversant lesdits moyens de découpe (30).

5. Procédé selon la revendication 1, 2, 3 ou 4, dans lequel une étape de recirculation est prévue à l'intérieur dudit élément tubulaire continu (5) desdites gouttes de liquide de refroidissement pulvérisées (L) et/ou de l'air humide qui est généré par évaporation desdites gouttes de liquide de refroidissement (L).

6. Procédé selon la revendication précédente, dans lequel ladite étape de recirculation est mise en œuvre au moyen d'un dispositif de recirculation (43) comprenant un convoyeur tubulaire (44) coaxial par rapport audit élément tubulaire continu (5) et au moins un dispositif de circulation (45) connecté de manière opérationnelle audit convoyeur tubulaire (44) pour forcer à travers celui-ci lesdites gouttes de liquide de refroidissement pulvérisées (L) et/ou l'air humide qui est généré par l'évaporation desdites gouttes de liquide de refroidissement (L).

7. Procédé selon l'une quelconque des revendications précédentes, dans lequel la pulvérisation du liquide de refroidissement (L) est mise en œuvre par une ou plusieurs buses de pulvérisation (41) placées sur ladite tête d'extrusion (10).

8. Procédé selon la revendication précédente, dans lequel lesdites une ou plusieurs buses de pulvérisation (41) sont alimentées par une ligne d'alimentation (50) dudit liquide de refroidissement (L) comportant au moins une branche (53) traversant ladite tête d'extrusion (10).

9. Procédé selon la revendication précédente, dans lequel ladite au moins une branche (53) est isolée thermiquement par rapport à ladite tête d'extrusion (10) de manière à éviter ou minimiser le réchauffement dudit liquide de refroidissement (L) lors du passage à travers celle-ci (10).

10. Procédé selon la revendication 8 ou 9, dans lequel ladite au moins une branche (53) est au moins partiellement refroidie pendant le passage à travers ladite tête d'extrusion (10).

11. Procédé selon l'une quelconque des revendications 7 à 10, dans lequel lesdites une ou plusieurs buses de pulvérisation (41) sont du type pneumatique dans lesquelles le liquide de refroidissement (L) est mélangé avec de l'air comprimé à une pression prédéterminée pour générer un flux mixte d'air et de liquide de refroidissement.

12. Procédé selon la revendication précédente, dans lequel ladite pression prédéterminée est de 2 bars à 6 bars.

13. Procédé selon la revendication 11 ou 12, dans lequel ledit convoyeur tubulaire (44) dépasse de ladite tête d'extrusion (10), lesdites une ou plusieurs buses de pulvérisation pneumatiques (41) étant placées de manière périphérique à celle-ci.

14. Procédé selon l'une quelconque des revendications précédentes, comprenant en outre une étape de calibrage de l'élément tubulaire continu (5) qui est mise en œuvre en même temps que ladite étape de refroidissement de la surface externe (6) du même élément tubulaire continu (5), le procédé comprenant en outre l'étape d'acheminement de l'élément tubulaire continu (5) dans au moins un cylindre de calibrage (20) de diamètre prédéterminé, ladite étape de calibrage étant mise en œuvre en faisant adhérer la surface externe (6) de l'élément tubulaire continu (5) à la surface interne (21) dudit cylindre de calibrage (20), ladite étape de refroidissement de la surface externe (7) de l'élément tubulaire continu (5) étant mise en œuvre en refroidissant la surface externe (22) dudit cylindre de calibrage (20).

15. Ligne destinée à la production continue de tuyaux rigides, en particulier à la construction ou à l'utilisation hydraulique, comprenant :
- au moins une tête d'extrusion (10) susceptible d'extruder au moins un matériau polymère pour obtenir un élément tubulaire continu (5) comportant une surface externe (6) et une surface interne (7) ;
- au moins un cylindre de calibrage (20) de l'élément tubulaire continu (5) dépassant de l'au moins une tête d'extrusion (10) ;
- des moyens de refroidissement permettant de refroidir l'élément tubulaire continu (5) ;
- des moyens de découpe (30) permettant de découper l'élément tubulaire continu refroidi (5) pour obtenir une pluralité de tuyaux rigides finis (1) ;
dans lequel lesdits moyens de refroidissement de l'élément tubulaire continu (5) comprennent une enveloppe de refroidissement (40) placée de manière externe par rapport audit au moins un cylindre de calibrage (20) pour refroidir la surface externe (6) de l'élément tubulaire continu (5) lors du calibrage de celui-ci, lesdits moyens de refroidissement comprenant une ou plusieurs buses de pulvérisation (41), les buses de pulvérisation (41) étant alimentées par une ligne d'alimentation (50) du liquide de refroidissement (L), les buses de pulvérisation étant placées sur ladite tête d'extrusion (10) pour pulvériser sur la surface interne (7) de l'élément tubulaire continu (5) des gouttes d'un liquide de refroidissement (L) de diamètre moyen inférieur à 250 µm, de manière à obtenir le refroidissement homogène à la fois de la surface externe (6) et de la surface interne (7) de l'élément tubulaire continu (5) ;
dans lequel
ladite ligne d'alimentation (50) est configurée de sorte que la quantité de liquide de refroidissement pulvérisé (L) est telle qu'il s'évapore une fois en contact avec ladite surface interne (7) sans s'accumuler sous forme liquide à l'intérieur de l'élément tubulaire continu (5), de sorte que ladite surface interne (7) est sensiblement sèche lors de la découpe de l'élément tubulaire continu (5) sans l'utilisation des moyens d'aspiration d'eau dans celui-ci.
